(19) **Europäisches Patentamt**

**European Patent Office**

**Office européen des brevets**

(11) **EP 1 340 988 B1**

(12) **EUROPÄISCHE PATENTSCHRIFT**

(45) Veröffentlichungstag und Bekanntmachung des Hinweises auf die Patenterteilung:
**17.05.2006  Patentblatt 2006/20**

(51) Int Cl.:
*G01R 27/16* (2006.01)   *H02J 3/00* (2006.01)

(21) Anmeldenummer: **03003734.5**

(22) Anmeldetag: **19.02.2003**

(54) **Verfahren und Vorrichtung zur Messung der Impedanz eines elektrischen Energieversorgungsnetzes**

Method and device for measuring the impedance in an electrical energy supply network

Méthode et appareil pour mesurer l'impedance dans un réseau d'alimentation électrique

(84) Benannte Vertragsstaaten:
**AT BE BG CH CY CZ DE DK EE ES FI FR GB GR HU IE IT LI LU MC NL PT SE SI SK TR**

(30) Priorität: **19.02.2002  DE 10207856**

(43) Veröffentlichungstag der Anmeldung:
**03.09.2003  Patentblatt 2003/36**

(73) Patentinhaber: **Institut für Solaire Energieversorgungstechnik (ISET) Verein an der Universität Gesamthochschule Kassel e.V.**
**34119 Kassel (DE)**

(72) Erfinder:
• **Fasshauer, Heiko**
  **37235 Hessisch-Lichtenau (DE)**

• **Viotto, Michael**
  **34128 Kassel (DE)**

(74) Vertreter: **Freiherr von Schorlemer, Reinfried**
**Karthäuser Strasse 5A**
**34117 Kassel (DE)**

(56) Entgegenhaltungen:
**EP-A- 0 600 726          DE-C- 19 522 496**
**US-B1- 6 208 945**

• **PFLIER, JAHN, JENTSCH: "Elektrische Messgeräte und Messverfahren" 1978 , SPRINGER VERLAG , DE XP002252012 4. Auflage, ISBN: 3-540-08601-3 * Seite 141, Zeile 21 - Seite 142, Zeile 34; Abbildung 3.4.5.C ***

EP 1 340 988 B1

**Beschreibung**

Die Erfindung betrifft ein Verfahren und eine Vorrichtung der in den Oberbegriffen der Ansprüche 1 und 16 angegebenen Gattungen.

Beim Betrieb von elektrischen Energieversorgungsnetzen ergibt sich zuweilen der Wunsch, das komplette Netz oder Teile davon für alle oder einzelne Verbraucher abzuschalten oder nach einem Ausfall abgeschaltet zu lassen, um zur Durchführung von Wartungs- oder Reparaturarbeiten einen spannungsfreien Zustand sicherzustellen. Das ist dann nicht ohne weiteres möglich, wenn das Netz nicht nur von einer zentralen Energieversorgungsanlage, sondern auch von dezentralen Spannungsquellen wie z.B. Photovoltaikanlagen gespeist wird, da diese auch im Falle einer vom Betreiber der zentralen Anlage aus erfolgten Netzabschaltung od. dgl. weiterhin Energie in das Netz liefern und daher zu einer lokalen Inselbildung führen.

Beim Vorhandensein von dezentralen Spannungsquellen, die bei einer Netzabschaltung oder dgl. nicht zur Deckung des bestehenden Energiebedarfs ausreichen und daher insbesondere einen Spannungsabfall erleiden, kann eine unerwünschte Inselbildung durch Überwachung der Spannung und automatisches Abschalten der betreffenden dezentralen Anlage beim Unterschreiten einer vorgegebenen Mindestspannung vermieden werden. Ist die dezentrale Spannungsquelle dagegen in der Lage, die Netzspannung auch bei einem teilweisen oder totalen Ausfall oder Abschalten wesentlicher Komponenten weiterhin in engen Toleranzen hinsichtlich Amplitude und Frequenz aufrecht zu erhalten, dann würde die beschriebene Überwachungsmethode allein nicht zu einer Abschaltung der dezentralen Spannungsquelle führen können.

Um auch in einem solchen Fall zu vermeiden, daß lokale Inselnetze entstehen und zu einer Gefährdung von Personen und/oder elektrischen Anlagen führen, sind Verfahren und Vorrichtungen der eingangs bezeichneten Gattung bekannt. Diese dienen dem Zweck, ungewöhnliche Impedanzänderungen im Netz zu erkennen und beim Erreichen kritischer Werte für die Abschaltung von zugeordneten dezentralen Spannungsquellen zu sorgen. Gefordert wird eine Abschaltung in der Regel erst beim Auftreten einer Impedanzvergrößerung im Netz von 0,5 Ω oder mehr (VDE 0126). Dabei wird davon ausgegangen, daß derartige Impedanzänderungen beim normalen Netzbetrieb nicht auftreten und daher kennzeichnend für den Ausfall oder die gewünschte Abschaltung einer Transformatorstation oder dgl. sind. Eine weitere Forderung besteht darin, daß die Abschaltung innerhalb eines Zeitraums von maximal fünf Sekunden ab Abschaltung bzw. Ausfall des Netzes erfolgt, weshalb eine kontinuierliche bzw. quasi-kontinuierliche Überwachung und Messung der Netzimpedanz erforderlich ist.

Zur Messung der Impedanz eines elektrischen Energieversorgungsnetzes sind unterschiedliche Verfahren und Vorrichtungen bekannt. Eine erste bekannte Lösung sieht vor, den eingespeisten Strom eines Wechselrichters für eine Netzperiode zunächst um einen bestimmt Wert anzuheben und in der nächsten Netzperiode auf Null zu reduzieren (DE-C-195 22 496). Der Unterschied des Effektivwerts der in beiden Perioden gemessenen Netzspannung dient zusammen mit dem bekannten eingespeisten Strom zur Berechnung der Netzimpedanz. Prizipbedingt arbeitet dieses Verfahren bei der Grundfrequenz des Netzes. Hier sind generell die größten Störungen z.B. durch andere angeschlossene Netzteilnehmer zu erwarten. Darüber hinaus führt die begrenzte Messdauer von jeweils einer Periode mit Einspeisung und einer Periode ohne Einspeisung zu einer hohen Störempfindlichkeit der Messung. Diese Störempfindlichkeit muß durch entsprechend hohe eingespeiste Ströme ausgeglichen werden. Die Bereitstellung dieser Ströme erfordert bei Speisung des Wechselrichters durch nicht steuerbare Energiequellen wie z.B. Photovoltaikgeneratoren entsprechende Energiespeicher, die zusätzliche Kosten verursachen. Die vergleichsweise hohen netzfrequenten Stromänderungen erzeugen darüber hinaus unerwünschte Netzrückwirkungen, z.B. Flicker.

Weiter ist es bekannt, die Messung der Impedanz eines Energieversorgungsnetzes mit Hilfe einer Prüfimpedanz vorzunehmen ((DE-C-195 04 271). Dies erfordert jedoch eine aufwendige Leistungselektronik und weist aufgrund der Messung bei der Grundfrequenz des Netzes die gleichen prinzipiellen Probleme wie die o.g. Verfahren auf.

Das Problem der grundfrequenten Störungen der Netzspannung soll nach zwei weiteren bekannten Vorschlägen (US-B-5 587 662 und US-B-5 818 245) dadurch gelöst werden, daß die Netzimpedanz bei anderen Freuquenzen als der Grundfrequenz gemessen wird. Hierbei wird jedoch nur während der Einspeisung eines Prüfstroms die Messung durchgeführt. Bei der nachfolgenden Analyse der Meßdaten führen daher bereits vorhandene Störungen der Netzspannung zu Fehlern bei der Ermittlung der Netzimpedanz. Beide Vorschläge sehen darüber hinaus nur die Einspeisung von Strom mit einer Messfrequenz vor. Störungen der Netzspannung bei dieser Frequenz führen dann zu einer starken Verfälschung des Meßergebnisses.

Schließlich sind Verfahren und Vorrichtungen der eingangs bezeichneten Gattungen bekannt, bei denen eine weitere Verbesserung durch die Verwendung eines Prüfstroms erreicht wird, der sich aus mehreren Frequenzanteilen zusamensetzt (US-B-6 208 945). Wie bei den zuvor genannten Vorschlägen erfolgt die Messung der Netzspannung und des Netzstroms zwar unter der Einwirkung des Prüfstroms, doch führen bereits bestehende Störungen der Netzspannung zu einer Verfälschung der Messung.

Schließlich ist es bekannt, zur Messung der Impedanz eines Energieversorgungsnetzes pulsförmige Prüfströme zu verwenden (DE-A-100 06 443).

Diese Ströme weisen teilweise sehr hohe Frequenzanteile auf, bei denen die gemessenen Werte der frequenzabhängigen Netzimpedanz keine sinnvolle Aussage mehr über den Zustand des Energieversorgungsnetzes machen. Die Störungen der Netzspannung mit diesen impulsförmigen Strömen ist ebenfalls ein Nachteil dieser Methode.

Ausgehend von diesem Stand der Technik liegt der Erfindung das technische Problem zugrunde, die eingangs bezeichneten Verfahren und Vorrichtungen so zu ge stalten, daß durch die Messung der Netzimpedanz nur geringe Störungen im Netz verursacht werden und die Netzimpedanz auch bei Störungen der Netzspannung und bei nicht konstanter Netzfrequenz hinreichend genau ermittelt werden kann.

Zur Lösung dieses Problems dienen die kennzeichnenden Merkmale der Ansprüche 1 und 15.

Die Erfindung bringt den Vorteil mit sich, daß wegen der Messung der Netzspannung und des Netzstroms bei wenigstens einer von der Netzfrequenz abweichenden, vorzugsweise zwischenharmonischen Frequenz Einflüsse von Störungen der Netzspannung und der Netzfrequenz weitgehend reduziert werden. Aufgrund der Messung sowohl mit als auch ohne Prüfstrom und eine entsprechende Analyse dieser Daten wird die Empfindlichkeit des Verfahrens für Störungen der Netzspannung weiter reduziert. Außerdem können vergleichsweise kleine, im Prüfintervall kontinuierliche Prüfströme verwendet werden, die keine Störungen im Netz verursachen oder ungewünschte Oberschwingungen zur Folge haben. Weiterhin ist es möglich, die für die Durchführung des erfindungsgemäßen Verfahrens benötigten Bauelemente weitgehend in eine netzparallele, ohnehin vorhandene Stromquelle zu integrieren, was eine besonders kostengünstige Ausbildung der erfindungsgemäßen Vorrichtung ins- gesamt ermöglicht.

Weitere vorteilhafte Merkmale der Erfindung ergeben sich aus den abhängigen Ansprüchen.

Die Erfindung wird nachfolgend in Verbindung mit den beiliegenden Zeichnungen an Ausführungsbeispielen näher erläutert. Es zeigen:

Fig. 1 ein Ausführungsbeispiel der erfindungsgemäßen Vorrichtung in Form eines vereinfachten Blockschaltbilds;

Fig. 2 in einer der Fig 1 ähnlichen Ansicht eine besonders kostengünstige Variante der erfindungsgemäßen Vorrichtung, bei der in einem Stromrichter ohnehin vorhandene Komponenten genutzt werden; und

Fig. 3 schematisch den Verlauf der Netzspannung und des Netzstroms während eines kompletten Prüfintervalls bei Anwendung des erfindungsgemäßen Verfahrens.

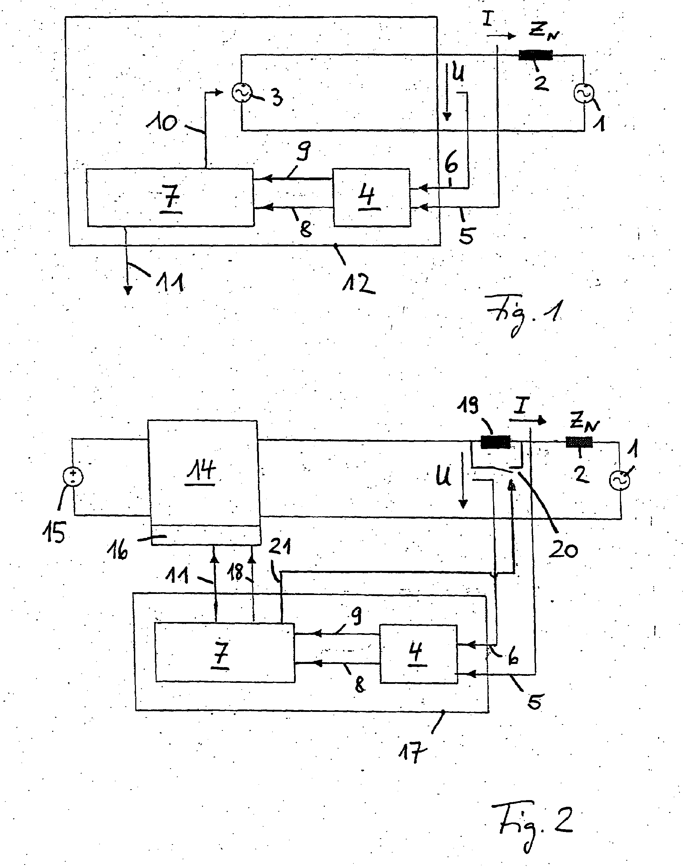

Fig. 1 zeigt schematisch ein übliches elektrisches Energieversorgungsnetz (z. B. 230 $V_{eff}$ 50 Hz) mit einer zentralen Wechselspannungsquelle 1 und einer Impedanz 2 mit dem Wert $Z_N$, der sich unter anderem aus einer Vielzahl von parallel an das Netz angeschlossenen, nicht dargestellten Verbrauchern ergibt. Die erfindungsgemäße Vorrichtung enthält nach Fig. 1 eine steuerbare, an einem Netzanschluß zusätzlich in das Netz schaltbare Wechselstromquelle 3, mittels derer ein Prüfstrom in das Netz eingeprägt werden kann, ferner eine Meßeinrichtung 4 mit zwei Eingängen 5 und 6 sowie eine Auswerteeinheit 7. Die in geeigneter Weise an das Netz gelegten Eingänge 5 und 6 der Meßeinrichtung 4 dienen in an sich bekannter Weise zur Erfassung und Vorverarbeitung von Meßwerten für den Netzstrom (Eingang 5, Pfeil I) und die Netzspannung (Eingang 6, Pfeil U). Unter einer "Vorverarbeitung" der erhaltenen Meßwerte wird hier z. B. verstanden, daß die gemessene Spannung von z. B. 325 V auf einen für Meß-, Verarbeitungs- und Steuerzwecke brauchbaren Wert von z. B. 10 V reduziert, aus Sicherheitsgründen mit z. B. optischen oder magnetischen Mitteln galvanisch von Netz getrennt, je nach Bedarf gefiltert und gegebenenfalls mit Hilfe eines Analog/Digital-Wandlers in einen digitalen Wert umgewandelt wird, falls eine analoge Verarbeitung der Meßsignale unerwünscht ist. Entsprechend können die für den Netzstrom erhaltenen Meßwerte verarbeitet werden. An zwei Ausgängen 8 und 9 der Meßeinrichtung 4 werden schließlich Meßsignale abgegeben, die für die gemessenen Netzströme und Netzspannungen charakteristisch sind. An diese Ausgänge 8 und 9 ist auch die Auswerteeinheit 7 angeschlossen, in der die erhaltenen Meßsignale nach dem erfindungsgemäßen Verfahren ausgewertet werden.

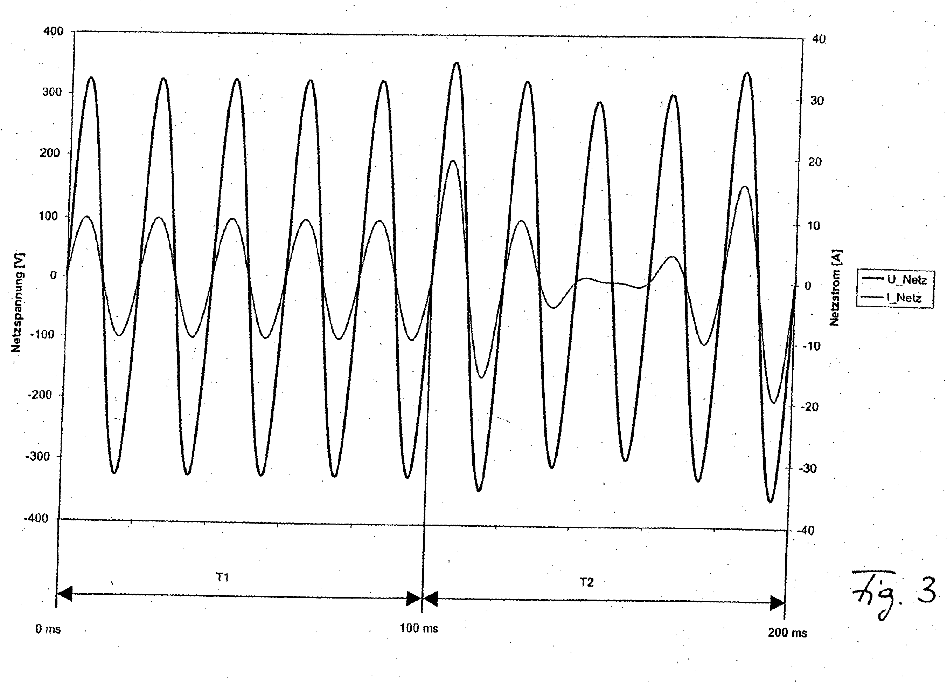

Das erfindungsgemäße Verfahren beginnt mit der Messung des Netzstroms I und der Netzspannung U während eines ersten vorgewählten Zeitintervalls T1, das in Fig. 3 angedeutet ist. Eine dünne durchgezogene Linie bezeichnet dabei den Netzstrom I, eine dicke durchgezogene Linie dagegen die Netzspannung U, wobei eine übliche Frequenz von 50 Hz vorausgesetzt ist, obwohl sich die Erfindung in entsprechender Abwandlung natürlich auch auf andere Netze mit z. B. 60 Hz anwenden läßt. Zu Beginn eines zweiten vorgewählten Zeitintervalls T2 (Fig. 3) wird dann mittels der steuerbaren Stromquelle 3 zusätzlich ein Prüfstrom in das Netz eingeprägt, indem z. B. mittels eines Ausgangs 10 der Auswerteeinheit 7 ein Startsignal übermittelt wird, das die Einprägung des Prüfstroms einleitet. Im Ausführungsbeispiel wird der Prüfstrom jeweils in einem Nulldurchgang der Netzspannung bzw. des Netzstroms synchron zu- und wieder abgeschaltet. Der Prüfstrom wird im Ausführungsbeispiel aus zwei periodischen Signalen mit den Frequenzen f1 = 40 Hz und f2 = 60 Hz zusammengesetzt, die beide von der Nennfrequenz 50 Hz des Netzes abweichen, wodurch sich die im Zeitintervall T2 der Fig. 3 übertrieben groß dargestellten Änderungen des Strom- und Spannungsverlaufs ergeben.

Mit Hilfe der Meßeinrichtung 4 werden während beider Zeitintervalle T1 und T2, die einen kompletten Meßzyklus ergeben, die Ströme und Spannungen gemessen. Mit diesen Meßwerten wird in der Auswerteeinheit 7 eine Fourieranalyse durchgeführt, um aus den im Zeitintervall T1 ohne den Prüfstrom erhaltenen Meßwerten und den im Zeitintervall T2 mit dem Prüfstrom erhaltenen Meßwerten die resultierende Impedanz $Z_N$ des Energieversorgungsnetzes bei der Nennfrequenz zu ermitteln. Hierzu wird z. B. wie folgt vorgegangen:

Es werden zunächst der Netzstrom und die Netzspannung während des Zeitintervalls T1 gemessen und dadurch die Werte $I_{T1}$ (t) und $U_{T1}$ (t) erhalten. Im Anschluß daran (Fig. 3) wird der Prüfstrom mit den Frequenzen f1 und f2 eingeprägt, wobei

$$I_{Prüf} = I_{f1} \cdot \sin (2 \pi f1t) + I_{f2} \cdot \sin (2 \pi f2t)$$

ist, was zu Meßwerten des Netzstroms und der Netzspannung $I_{T2}$ (t) und $U_{T2}$ (t) führt.

Es wird jetzt in der Auswerteeinheit 7 eine diskrete Fouriertransformation DFT durchgeführt, indem zunächst komplexe Fourierkoeffizienten des Netzstroms und der Netzspannung nach den folgenden Gleichungen ermittelt werden:

$$DFT(U_{T1} (t),f) = U_{T1} (f) = Re(U_{T1} (f)) + j \cdot Im(U_{T1} (f))$$

$$DFT(I_{T1} (t),f) = I_{T1} (f) = Re(I_{T1} (f)) + j \cdot Im(I_{T1} (f))$$

$$DFT(U_{T2} (t),f) = U_{T2} (f) = Re(U_{T2} (f)) + j \cdot Im(U_{T2} (f))$$

$$DFT(I_{T2} (t),f) = I_{T2} (f) = Re(I_{T2} (f)) + j \cdot Im(I_{T2} (f)).$$

Darin bedeuten jeweils "Re" die Realteile und "Im" die Imaginärteile. Außerdem wird die Rechnung jeweils getrennt für die beiden Frequenzen f1 und f2 und, wie ersichtlich, getrennt für die Zeitintervalle T1 und T2 durchgeführt, so daß insgesamt acht Realteile und acht Imaginärteile erhalten werden.

Aus den Fourierkoeffizienten werden nun durch eine nach den folgenden Gleichungen erfolgende Differenzbildung die komplexen Differenzen für die Zeitintervalle T1 und T2 gebildet, die für die Änderungen des Netzstroms und der Netzspannung charakteristisch sind:

$$U_{DIFF} (f) = Re(U_{T2} (f)) - Re(U_{T1} (f)) + j [Im(U_{T2} (f)) - Im(U_{T1} (f))]$$

$$I_{DIFF} (f) = Re(I_{T1} (f)) - Re(I_{T2} (f)) + j [Im(I_{T1} (f)) - Im(I_{T2} (f))].$$

Auch hierbei wird getrennt für die Frequenzen f1 und f2 vorgegangen, so daß je vier Real- und Imaginärteile erhalten werden. Aus diesen können die komplexen Netzimpedanzen wie folgt erhalten werden:

$$Z_N(f) = \frac{U_{DIFF}(f)}{I_{DIFF}(f)},$$

was getrennt für f1 und f2 je einen Wert $Z_N$ (f1) bzw. $Z_N$ (f2) ergibt, aus denen die resulierende Netzimpedanz bei der Netzfrequenz $f_{NETZ}$ durch die Mittelwertbildung

$$Z(f_{NETZ}) = \frac{Z_N(f1) + Z_N(f2)}{2}$$

abgeleitet wird.

Eine hinreichend genaue Berechnung der Netzimpedanz durch Mittelwertbildung ist im Ausführungsbeispiel insbesondere deshalb möglich, weil die beiden Prüffrequenzen f1, f2 mit z. B. 40 Hz und 60 Hz vorzugsweise symmetrisch zu beiden Seiten der Netzfrequenz $f_{NETZ}$ gewählt werden. Alternativ könnten die Prüffrequenzen auch z. B. f1 = 45 Hz und f2 = 65 Hz oder f1 = 10 Hz und f2 = 100 Hz betragen. In diesen Fällen könnte die resultierende Netzfrequenz anstatt durch Mittelwertbildung z. B. auch durch eine Geradenapproximation aus den für f1 und f2 erhaltenen Impedarizwerten abgeleitet werden. In analoger Weise wäre es möglich, den Prüfstrom aus nur einem einzigen periodischen Signal mit nur einer von der Netzfrequenz abweichenden Frequenz zu bilden. In diesem Fall könnte die Fourieranalyse in entsprechender Weise durchgeführt werden, wobei die oben angegebenen Gleichungen nur für je eine Frequenz zu lösen wären. Außerdem würde nur ein Wert

$$Z_N(f1) = \frac{U_{DIFF}(f1)}{I_{DIFF}(f1)}$$

erhalten mit der Folge, daß keine Mittelwertbildung und Geradenapproximation möglich wäre. Da aber die komplexen Impedanzen und damit auch die Frequenzverläufe der Impedanzen erhalten werden, kann daraus die Impedanz bei der Nennfrequenz berechnet werden.

Bei der Beschreibung des Ausführungsbeispiels wurde außerdem vorausgesetzt, daß sinusförmige Prüfströme eingeprägt werden bzw. der Prüfstrom aus sinusförmigen Signalen zusammengesetzt wird. Das ist jedoch nicht zwingend erforderlich, weil z. B. auch ein dreieckförmiger Prüfstrom eingeprägt werden könnte, der seinerseits aus einer Mehrzahl von sinusförmigen Signalen mit unterschiedlichen Frequenzen zusammengesetzt gedacht werden kann und daher eine Fourieranalyse mit einer oder mehreren dieser Frequenzen ermöglicht.

In jeder der beschriebenen Fallgestaltungen ergibt sich der durch die Erfindung beabsichtigte Vorteil, daß auch bei von der Frequenz abhängigen Impedanzen eine Bestimmung der Netzimpedanz bei der Nennfrequenz des Netzes möglich ist, indem zunächst Impedanzen selektiv bei im Netz nicht vorhandenen Frequenzen ermittelt und daraus durch eine Approximation die Netzimpedanz bei der Nennfrequenz berechnet wird. Vorzugsweise werden hierbei für die verwendeten Prüffrequenzen jeweils zwischenharmonische Frequenzen gewählt, die auch nicht in den zur Netzfrequenz gehörenden Oberschwingungen vorkommen. Dadurch ergibt sich eine Ermittlungsmethode, die weitgehend frei von Störungen im Netz ist und insbesondere bei Anwendung von Prüffrequenzen, die nahe bei der Nennfrequenz liegen, auch zu ausreichend genauen Ergebnissen führt.

Die Zeitintervalle T1 und T2 werden, um eine exakte Fourieranalyse durchführen zu können, vorzugsweise identisch und so gewählt, daß sie mit derselben Phasenlage beginnen und enden, so daß sich dieselben Phasenlagen für die Phasen mit bzw. ohne Prüfstrom erzielen lassen. Das ist dann möglich, wenn T1 und T2 mindestens so lang wie das kleinste gemeinsame Vielfache der Periode der Netzfrequenz und der Prüffrequenz (en) ist und daher im Zeitintervall T2 jede dieser Perioden wenigstens einmal vorkommt. Bei der Netzfrequenz von 50 Hz und Prüffrequenzen von 40 Hz und 60 Hz gilt z. B.:

$$T_{NETZ} = 1/f_{NETZ} = 20 \text{ ms}$$

$$t1 = 1/f1 = 25 \text{ ms}$$

$$t2 = 1/f2 = 16.667 \text{ ms,}$$

woraus folgt, daß das kleinste gemeinsame Vielfache hier 100 ms beträgt (vgl. Fig. 3). Mit t1 = 1/f1 = 22,222 ms (f1 = 45 Hz) und t2 = 1/f2 = 15,385 ms (f2 = 65 Hz) würde sich z. B. ein kleinstes gemeinsames Vielfaches von 200 ms ergeben. Um hier zu vernünftigen Werten zu kommen, wird erfindungsgemäß vorgeschlagen, Prüffrequenzen zu wählen, die zwischen 9 Hz und 121 Hz liegen.

Da die Abschaltung der dezentralen Spannungsquellen spätestens innerhalb von fünf Sekunden ab Netzabschaltung oder Netzausfall erfolgen soll, beträgt das zweite Zeitintervall T2 vorzugsweise nicht mehr als eine Sekunde. Entsprechend kurz kann T1 gewählt werden, so daß insgesamt eine Meßzeit von maximal 2 Sekunden benötigt wird. Tatsächlich reichen im Ausführungsbeispiel jedoch 200 ms aus, um bei Erkennung einer Impedanzänderung im Netz von 0,5 $\Omega$ oder mehr mittels der Auswerteeinheit 7 ein Signal zu erzeugen, das zur Abschaltung einer dezentralen Spannungsquelle dienen kann und z. B. an einem Ausgang 11 (Fig. 1) der Auswerteeinheit 7 abgegeben wird. Ausreichend wäre es daher, den 200 ms dauernden Meßzyklus alle fünf Sekunden einmal zu durchlaufen.

Das am Ausgang 11 erscheinende Signal kann in verschiedener Weise erzeugt werden. Im einfachsten Fall ist das Signal ein Prüfsignal, das den in der Auswerteeinheit 7 ermittelten Wert für die Netzimpedanz angibt und mittels einer der dezentralen Spannungsquelle zugeordneten Anordnung darauf überprüft wird, ob die Spannungsquelle abgeschaltet werden muß oder nicht. Alternativ kann das Signal ein Statussignal sein, das angibt, ob die Netzimpedanz größer oder kleiner ist, als einem kritischen Grenzwert entspricht. In diesem Fall kann der Spannungsquelle eine auf das Statussignal reagierende Abschaltvorrichtung zugeordnet sein. Eine weitere Möglichkeit besteht darin, am Ausgang 11 für den Fall, daß die Netzimpedanzänderung einen kritischen Grenzwert von z. B. 0,5 $\Omega$ überschritten hat, ein Schaltsignal zu erzeugen, das die dezentrale Spannungsquelle deaktiviert bzw. vom Netz abkoppelt. Wie die gewünschte Abschaltung der dezentralen Spannungsquelle im einzelnen durchgeführt wird, kann von den Bedürfnissen des Einzelfalls abhängig gemacht werden.

Die Übertragung der Signale von der Meßeinrichtung 4 zur Auswerteeinheit 7 bzw. von dieser zur steuerbaren Stromquelle kann je nach Bedarf analog oder digital erfolgen.

Die anhand der Fig. 1 beschriebene Vorrichtung wird vorzugsweise als kompakte, in einem Gehäuse untergebrachte Vorrichtung hergestellt, wie durch die umrahmende Linie 12 angedeutet ist. Das Gehäuse ist in diesem Fall nach außen hin lediglich mit den zum Anschluß der Stromquelle 3 und der Meßeinrichtung 4 an das Netz erforderlichen Anschlüssen und dem zum Anschluß an eine zu überwachende bzw. zu steuernde Spannungsquelle bestimmten Ausgang 11 versehen.

Demgegenüber zeigt Fig. 2, in der gleiche Teile mit denselben Bezugszeichen wie in Fig. 1 versehen sind, einen netzparallelen Stromrichter 14, der an eine dezentrale Gleichspannungsquelle 15 wie z. B. eine Photovoltaikanlage angeschlossen ist, den von ihr erzeugten Gleichstrom in Wechselstrom umwandelt und diesen in das Netz einspeist. Stromrichter 14 dieser Art können nicht nur als steuerbare Stromquellen betrachtet werden, sondern verfügen auch in der Regel über Mittel zur Erfassung von Strom- oder Spannungs-Meßwerten, eine Leistungselektronik, eine elektronische Steuerung 16 dafür und Mittel zur Regelung des eingespeisten Stroms nach Amplitude und Frequenz. In einem solchen Fall können daher zur Realisierung der erfindungsgemäßen Vorrichtung die im Stromrichter 14 prinzipbedingt ohnehin bereits vorhandenen Bauelemente bzw. Baugruppen genutzt werden.

Wie in Fig. 2 angedeutet ist, wird z. B. die Stromquelle 3 nach Fig. 1 durch den Stromrichter 14 nach Fig. 2 ersetzt, so daß die erfmdungsgemäße Vorrichtung nur noch die Meßeinrichtung 4 und die Auswerteeinrichtung 7 enthält, deren Ausgang 11 mit der Steuerung 16 des Stromrichters 14 verbunden ist. Im übrigen arbeitet die z. B. in einem Gehäuse 17 untergebrachte Vorrichtung wie die nach Fig. 1.

Die Einprägung des Prüfstroms in das Netz erfolgt im Fall der Fig. 2 dadurch; daß dem Grundstrom, der von dem von der Gleichspannungsquelle 15 mit elektrischer Energie versorgten Stromrichter 14 erzeugt wird, ein Prüfstrom überlagert wird. Dies kann z. B. dadurch erfolgen, daß dem betriebsbedingten Strom-Sollwert des Stromrichters 14 ein Sollwert für den Prüfstrom überlagert und daher vom Stromrichter 14 während der Zeitintervalle T2 ein um den Prüfstrom modifizierter Grundstrom an das Netz geliefert wird. Daher kann der Sollwert für den Prüfstrom z. B. in einem elektronischen Speicher des Stromrichters 14 abgelegt oder sonstwie von diesem erzeugbar sein und während der Zeitintervalle T2 aktiviert werden. Die Aktivierung kann mit Hilfe eines von der Auswerteeinheit 7 abgegebenen, den Beginn und das Ende der Zeitintervalle T2 angebenden Schaltungssignals erfolgen, das z. B. an einem zweiten Ausgang 18 der Auswerteeinheit 7 erscheint.

Damit die vom Prüfstrom verursachten Änderungen des Netzstroms und der Netzspannung möglichst wenig durch im Netz ablaufende Vorgänge gestört werden, enthält die Meßeinrichtung 4 vorzugsweise entweder eine auf die Nennfrequenz des Netzes abgestimmte Bandsperre oder auf die Prüffrequenzen f1, f2 abgestimmte Bandpässe. Dadurch werden Störungen durch Signale, die andere Frequenzen als die Prüffrequenzen f1, f2 haben, weitgehend ausgeschaltet.

Gemäß einer besonders bevorzugten Weiterbildung der Erfindung ist zwischen die steuerbare Stromquelle 3 bzw. 14 und das Netz eine bekannte Testimpedanz 19 (Fig. 2) mit dem Wert $Z_1$ geschaltet, der ein steuerbarer bzw. ein- und ausschaltbarer Schalter 20 parallel geschaltet ist. Ein Steuereingang dieses Schalters 20 ist z. B. mit einem dritten Ausgang 21 der Auswerteeinheit 7 verbunden. Die Aufgabe der Testimpedanz 19 besteht darin, von Zeit zu Zeit die Funktion der erfindungsgemäßen Vorrichtung zu überprüfen.

Hierzu wird im wesentlichen wie folgt vorgegangen:

Bei geschlossenem Schalter 20 ist die Testimpedanz 19 kurzgeschlossen. In diesem Fall arbeitet die Vorrichtung in der oben beschriebenen Weise unter Messung der Netzimpedanz 2. Wird der Schalter 20 dagegen durch ein von der Auswerteeinheit 7 übermitteltes Steuersignal geöffnet, dann wird mittels der beschriebenen Vorrichtung die Summe der Impedanzen 2 und 19, d. h. der Wert $Z_N + Z_1$ gemessen. Da Z, bekannt ist, kann mit dieser Messung bei Bedarf geprüft werden, ob sich mit der Testimpedanz 19 der erwartete Impedanzsprung um Z einstellt und die Vorrichtung daher einwandfrei arbeitet.

In den oben beschriebenen Ausführungsbeispielen wurde vorausgesetzt, daß die Steuersignale für den Beginn bzw. die Beendigung des Prüfstroms und die Ein- bzw. Ausschaltung des Schalters 20 direkt von der Auswerteeinheit 7 erzeugt bzw. abgegeben werden. Alternativ wäre es natürlich auch möglich, hierfür eine besondere Steuervorrichtung vorzusehen.

Ein weiteres bevorzugtes Ausführungsbeispiel der Erfindung sieht vor, jeder Vorrichtung gemäß obiger Beschreibung eine individuelle Kennung, z. B. eine Seriennummer od. dgl. zuzuordnen. Die Kennung ist z. B. so gestaltet, daß sie beim Einprägen des Prüfstroms dieser Vorrichtung automatisch mit in das Netz eingespeist wird und dann von anderen, ebenfalls an das Netz geschalteten Vorrichtungen erkannt werden kann. Eine solche Kennung kann z. B. dadurch realisiert werden, daß dem von der zugehörigen Vorrichtung erzeugten Prüfstrom zusätzlich ein Strom mit einer sehr hohen Frequenz überlagert wird, die für jede Vorrichtung eine andere ist und weder die gewünschte Messung der Netzimpedanz noch die zu diesem Zweck durchgeführte Fourieranalyse beeinträchtigt. Alternativ könnte die Anordnung auch derart sein, daß jede Vorrichtung einen für die jeweilige Kennung charakteristischen Stromverlauf in das Netz einspeist. Die Kennung kann vom Hersteller für jede einzelne Vorrichtung fest vorgegeben werden, indem sie z. B. in einem Speicher der Auswerteeinheit 7 abgelegt, durch eine codierte Schalterstellung eingestellt oder sonstwie zugeordnet wird. Dementsprechend wird in diesem Fall die Meßeinrichtung 4 oder die Auswerteeinheit 7 jeder Vorrichtung mit einer Erkennungseinrichtung versehen, die den gemessenen Netzstrom auf das Vorhandensein einer solchen Kennung überprüft und analysiert.

Wenn eine Mehrzahl von dezentralen Spannungs- bzw. Stromquellen 3 bzw. 14 parallel an das Netz geschaltet sind, dann ist es mit Hilfe der beschriebenen Kennungen und einer einfachen zusätzlichen Steuerung möglich, zu einem bestimmten Zeitpunkt immer nur mittels einer einzigen oder mit einer vorgewählten Anzahl der zugehörigen Vorrichtungen einen Prüfstrom in das Netz einzuprägen. Auf diese Weise kann vermieden werden, daß dem Netz zu irgendeinem Zeitpunkt eine unbekannte Anzahl von Prüfströmen aufgeprägt wird und dadurch falsche Meßergebnisse erzielt werden. In diesem Zusammenhang wäre es z. B. möglich, die Vorrichtung so zu programmieren, daß sie einen von ihr zu startenden Meßzyklus und insbesondere das von ihr einzuleitende Zeitintervall T2 immer nur dann freigibt, wenn zu demselben Zeitpunkt keine andere Vorrichtung einen Prüfstrom einprägt, oder die Freigabe des eigenen Prüfstroms so lange unterdrückt, wie dem Netz Prüfströme anderer Vorrichtungen aufgeprägt werden. Mit anderen Worten kann erreicht werden, daß jede Vorrichtung bei der Bewertung der eigenen Impedanzberechnung berücksichtigt, ob gleichzeitig auch die Prüfströme anderer Vorrichtungen aktiviert wurden. Da die Zeitintervalle T1 und T2 gemäß dem obigen Ausführungsbeispiel nur je 100 ms betragen, für die Abschaltung der dezentralen Spannungsquelle 15 aber z. B. fünf Sekunden zur Verfügung stehen, könnten theoretisch fünfundzwanzig Vorrichtungen betrieben werden, ohne daß zwei oder mehr Vorrichtungen gleichzeitig Prüfströme aussenden müssen müssen. Ein besonderer Vorteil der beschriebenen Vorgehensweise besteht außerdem darin, daß die verschiedenen Stromquellen unabhängig voneinander und ohne übergeordnete Zeitsteuerung od. dgl. betrieben werden können.

Die Erfindung ist nicht auf die beschriebenen Ausführungsbeispiele beschränkt, die auf vielfache Weise abgewandelt werden können. Insbesondere können die beschriebenen Vorrichtungen zur Überwachung und/oder Abschaltung von anderen als den beschriebenen photovoltaischen Netzeinspeisern eingesetzt werden. Dabei ist es, wie Fig. 1 und 2 zeigen, im Prinzip gleichgültig, ob die verschiedenen Bauelemente bzw. Funktionen der Vorrichtungen ganz oder teilweise bereits beim jeweiligen Netzeinspeiser vorhanden sind oder zusätzlich in diesen eingebaut bzw. implementiert werden müssen. Auch die im Einzelfall angewendete Berechnungsmethode für die Netzimpedanz kann eine andere als die beschriebene sein, zu welchem Zweck jede Auswerteeinheit 7 zweckmäßig mit den erforderlichen Rechnern (Microcontrollern, Prozessoren od. dgl.) und der zugehörigen Software ausgestattet wird. Weiterhin ist klar, daß die anhand eines einphasigen Netzes beschriebenen Verfahren und Vorrichtungen analog auch bei dreiphasigen Netzen angewendet werden können, indem z. B. jeder Phase eine eigene Vorrichtung zugeordnet oder eine einzige vorhandene Vorrichtung jeweils abwechselnd nacheinander auf jede der drei Phasen umgeschaltet wird. Weiter ist es möglich, die von der Auswerteeinheit 7 am Ausgang 11 ausgegebenen Informationen über das Netz an eine zentrale Steuerungstelle und/oder andere Vorrichtungen zu übertragen. Umgekehrt können von der Zentrale aus über das Netz Informationen oder Steuersignale an eine oder mehrere Vorrichtungen übermittelt werden. Hierdurch können z. B. bei Bedarf alle Vorrichtungen bzw. die damit verbundenen Spannungsquellen von einer Zentrale aus abgeschaltet oder der Zentrale Statussignale von allen angeschlossenen Vorrichtungen übermittelt werden. Die Übertragung erfolgt z. B. durch eine hochfrequente Modulation der Netzspannung mit Hilfe von Netzleitungsmodems (bidirektionale power line communication). Schließlich versteht sich, daß die verschiedenen Merkmale auch in anderen als den dargstellten und beschriebenen Kombinationen innerhalb des Umfangs der folgenden Ansprüche angewendet werden können.

**Patentansprüche**

1. Verfahren zur Messung der Impedanz eines Energieversorgungsnetzes bei dessen Nennfrequenz durch Einprägung eines Prüfstroms, der aus mindestens einem periodischen Signal mit wenigstens einer von der Nennfrequenz abweichenden Prüffrequenz (f1, f2) gebildet wird, in das Netz und Messung der **dadurch** erhaltenen Änderungen des Netzstroms und der Netzspannung, **dadurch gekennzeichnet, daß** der Netzstrom und die Netzspannung während eines ersten vorgewählten Zeitintervalls (T1) ohne und während eines zweiten vorgewählten Zeitintervalls (T2) mit Einprägung des Prüfstroms gemessen werden, daß eine Fourieranalyse für die Prüffrequenz bzw. die Prüffrequenzen (f1, f2) in der Weise durchgeführt wird, daß für die beiden Zeitintervalle (T1, T2) jeweils die komplexen Fourierkoeffizienten des Netzstroms und der Netzspannung für die Prüffrequenz bzw. die Prüffrequenzen ermittelt, daraus komplexe, für Änderungen des Neztstroms und der Netzspannung charakteristische Differenzen abgeleitet und die Differenzen zur Berechnung der Impedanz des Netzes bei der Prüffrequenz bzw. den Prüffrequenzen (f1, f2) verwendet werden und daß hieraus die Impedanz des Energieversorgungsnetzes bei der Nennfrequenz ermittelt wird.

2. Verfahren nach Anspruch 1, **dadurch gekennzeichnet, daß** der Prüfstrom aus wenigstens zwei periodischen Signalen mit von der Nennfrequenz abweichenden Prüffrequenzen (f1, f2) gebildet wird, mittels der Fourieranalyse resultierende Impedanzen für jede Prüffrequenz (f1, f2) ermittelt werden und die Impedanz des Energieversorgungsnetzes durch Approximation aus den für die Prüffrequenzen (f1, f2) erhaltenen Impedanzen abgeleitet wird.

3. Verfahren nach Anspruch 1 oder 2, **dadurch gekennzeichnet, daß** zur Bildung des Prüfstroms sinusförmige Signale verwendet werden.

4. Verfahren nach Anspruch 2 oder 3, **dadurch gekennzeichnet, daß** der Prüfstrom aus zwei Signalen gebildet wird, deren Prüffrequenzen (f1, f2) symmetrisch auf beiden Seiten der Nennfrequenz liegen.

5. Verfahren nach Anspruch 4, **dadurch gekennzeichnet, daß** die Impedanz des Energie-versorgungsnetzes durch Mittelwertbildung aus den bei den beiden Prüffrequenzen (f1, f2) ermittelten Impedanzen erhalten wird.

6. Verfahren nach einem der Ansprüche 1 bis 5, **dadurch gekennzeichnet, daß** die beiden Zeitintervalle (T1, T2) mindestens so lang wie das kleinste gemeinsame Vielfache der Perioden der Netzfrequenz und der Prüffrequenzen (f1, f2) sind.

7. Verfahren nach Anspruch 6, **dadurch gekennzeichnet, daß** das zweite Zeitintervall (T2) nicht länger als eine Sekunde ist.

8. Verfahren nach einem der Ansprüche 2 bis 7, **dadurch gekennzeichnet, daß** die beiden Prüffrequenzen (f1, f2) zwischen 9 Hz und 121 Hz liegen.

9. Verfahren nach einem der Ansprüche 1 bis 8, **dadurch gekennzeichnet, daß** die Einprägung des Prüfstroms und die daraus resultierenden Änderungen mit derselben Phasenlage wie die Messung des Netzstroms und der Netzspannung ohne Einprägung des Prüfstroms erfolgt.

10. Verfahren nach einem der Ansprüche 1 bis 9, **dadurch gekennzeichnet, daß** aus der für die Nennfrequenz ermittelten Impedanz ein Prüf-, Status- oder Schaltsignal abgeleitet wird.

11. Verfahren nach einem der Ansprüche 1 bis 10, **dadurch gekennzeichnet, daß** die Einprägung des Prüfstroms mit Hilfe eines netzparallelen Stromrichters erfolgt.

12. Verfahren nach einem der Ansprüche 1 bis 11, **dadurch gekennzeichnet, daß** zur Erfassung des Netzstroms und der Netzspannung ein netzparalleler Stromrichter (14) verwendet wird.

13. Verfahren nach Anspruch 11 oder 12, **dadurch gekennzeichnet, daß** ein Sollwert des Prüfstroms einem im Stromrichter erzeugten Sollwert für den Netzstrom überlagert wird.

14. Verfahren nach einem der Ansprüche 11 bis 13, **dadurch gekennzeichnet, daß** der Sollwert des Prüfstroms von einer unabhängigen Auswerteeinheit (7) auf den Stromrichter (14) übertragen wird.

**15.** Vorrichtung zur Messung der Impedanz eines Energieversorgungsnetzes bei dessen Nennfrequenz, enthaltend ein Mittel (3, 14) zur Einprägung eines Prüfstroms in das Netz, eine Meßeinrichtung (4) zur Messung des Netzstroms, der Netzspannung und der durch die Einprägung des Prüfstroms erhaltenen Änderungen des Netzstroms und der Netzspannung sowie eine an die Meßeinrichtung (4) angeschlossene Auswerteinheit (7), **dadurch gekennzeichnet, daß** sie zur Durchführung des Verfahrens nach einem oder mehreren der Ansprüche 1 bis 14 eingerichtet ist.

**16.** Vorrichtung nach Anspruch 15, **dadurch gekennzeichnet, daß** das Mittel (3, 14) eine steuerbare Stromquelle enthält.

**17.** Vorrichtung nach Anspruch 16, **dadurch gekennzeichnet, daß** die Stromquelle unter der Steuerung der Auswerteinheit (7) steht.

**18.** Vorrichtung nach Anspruch 16 oder 17, **dadurch gekennzeichnet, daß** die steuerbare Stromquelle ein netzparalleler Stromrichter (14) ist.

**19.** Vorrichtung nach Anspruch 18, **dadurch gekennzeichnet, daß** die Meßeinrichtung (4) zumindest teilweise ein integraler Bestandteil des Stromrichters (14) ist.

**20.** Vorrichtung nach Anspruch 18 oder 19, **dadurch gekennzeichnet, daß** die Auswerteeinheit (7) zumindest teilweise ein integraler Bestandteil des Stromrichters (14) ist.

**21.** Vorrichtung nach einem der Ansprüche 18 bis 20, **dadurch gekennzeichnet, daß** der Stromrichter (14) den Netzstrom einem Strom-Sollwert nachfährt und der Prüfstrom durch entsprechende Änderung dieses Strom-Sollwerts generiert wird.

**22.** Vorrichtung nach Anspruch 21, **dadurch gekennzeichnet, daß** der Sollwert des Prüfstroms im Stromrichter (14) erzeugbar oder in einem Speicher des Stromrichters (14) abgelegt und auf Signale von der Auswerteeinheit (7) hin ein- bzw. ausschaltbar ist.

**23.** Vorrichtung nach einem der Ansprüche 15 bis 22, **dadurch gekennzeichnet, daß** die Meßeinrichtung (7) eine auf die Nennfrequenz abgestimmte Bandsperre enthält.

**24.** Vorrichtung nach einem der Ansprüche 15 bis 23, **dadurch gekennzeichnet, daß** die Meßeinrichtung auf die Prüffrequenzen abgestimmte Bandpässe enthält.

**25.** Vorrichtung nach einem der Ansprüche 15 bis 24, **dadurch gekennzeichnet, daß** sie eine zwischen die Stromquelle und das Netz geschaltete, bekannte Testimpedanz (19) mit einem ihr parallel geschalteten, steuerbaren Schalter (20) enthält.

**26.** Vorrichtung nach Anspruch 25, **dadurch gekennzeichnet, daß** der Schalter (20) unter der Steuerung der Auswerteinheit (7) steht.

**27.** Vorrichtung nach einem der Ansprüche 15 bis 26, **dadurch gekennzeichnet, daß** sie mit einer individuellen, in das Netz einspeisbaren Kennung und Mitteln zur Analyse und Berücksichtigung von in das Netz eingespeisten Kennungen anderer, entsprechender Vorrichtungen versehen ist.

**Claims**

**1.** Method for measuring the impedance of an energy supply network at its nominal frequency by impressing a test current, which is formed from at least one periodic signal with at least one test frequency (f1, f2) differing from the nominal frequency, into the network and measuring the changes in the network current and network voltage obtained as a result thereof, **characterised in that** the network current and the network voltage are measured during a first preselected time interval (T1) without and during a second preselected time interval (T2) with impressing of the test current, that a Fourier analysis is conducted for the test frequency or test frequencies (f1, f2) so that for both time intervals (T1, T2) the complex Fourier coefficients of the network current and the network voltage are respectively determined for the test frequency or test frequencies, complex characteristic differences for changes in the network current and the network voltage are derived therefrom, and the differences are used to calculate the impedance of the network at the test frequency or test frequencies (f1, f2), and that herefrom the impedance of the energy supply network is determined at the nominal frequency.

2. Method according to Claim 1, **characterised in that** the test current is formed from at least two periodic signals with test frequencies (f1, f2) differing from the nominal frequency, impedances resulting by means of the Fourier analysis are determined for each test frequency (f1, f2) and the impedance of the energy supply network is derived from the impedances obtained for the test frequencies (f1, f2) by approximation.

3. Method according to Claim 1 or 2, **characterised in that** sinusoidal signals are used to form the test current.

4. Method according to Claim 2 or 3, **characterised in that** the test current is formed from two signals, the test frequencies (f1, f2) of which lie symmetrically on both sides of the nominal frequency.

5. Method according to Claim 4, **characterised in that** the impedance of the energy supply network is obtained by forming a mean from the impedances determined at the two test frequencies (f1, f2).

6. Method according to one of Claims 1 to 5, **characterised in that** the two time intervals (T1, T2) are at least as long as the smallest common multiple of the periods of the network frequency and the test frequencies (f1, f2).

7. Method according to Claim 6, **characterised in that** the second time interval (T2) is not longer than one second.

8. Method according to one of Claims 2 to 7, **characterised in that** the two test frequencies (f1, f2) lie between 9 Hz and 121 Hz.

9. Method according to one of Claims 1 to 8, **characterised in that** the impressing of the test current is conducted and the changes resulting therefrom are achieved with the same phase position as the measurement of the network current and the network voltage with no impressing of the test current.

10. Method according to one of Claims 1 to 9, **characterised in that** a test, status or switching signal is derived from the impedance determined for the nominal frequency.

11. Method according to one of Claims 1 to 10, **characterised in that** the impressing of the test current is conducted by means of a network-parallel power converter.

12. Method according to one of Claims 1 to 11, **characterised in that** a network-parallel power converter (14) is used to determine the network current and the network voltage.

13. Method according to Claim 11 or 12, **characterised in that** a set value of the test current is superposed on a set value for the network current generated in the power converter.

14. Method according to one of Claims 11 to 13, **characterised in that** the set value of the test current is transferred to the power converter (14) by an independent evaluation unit (7).

15. Device for measuring the impedance of an energy supply network at its nominal frequency, including a means (3, 14) for impressing a test current into the network, a measuring device (4) for measuring the network current, the network voltage and the changes in the network current and network voltage obtained by impressing the test current, and also an evaluation unit (7) connected to the measuring device (4), **characterised in that** it is fitted to conduct the method according to one or more of Claims 1 to 14.

16. Device according to Claim 15, **characterised in that** the means (3, 14) includes a controllable current source.

17. Device according to Claim 16, **characterised in that** the current source stands under the control of the evaluation unit (7).

18. Device according to Claim 16 or 17, **characterised in that** the controllable current source is a network-parallel power converter (14).

19. Device according to Claim 18, **characterised in that** the measuring device (4) is at least partially an integral component of the power converter (14).

**20.** Device according to Claim 18 or 19, **characterised in that** the evaluation unit (7) is at least partially an integral component of the power converter (14).

**21.** Device according to one of Claims 18 to 20, **characterised in that** the power converter (14) applies a current set value to the network current and the test current is generated by a corresponding change of this current set value.

**22.** Device according to Claim 21, **characterised in that** the set value of the test current can be generated in the power converter (14) or filed in a memory of the power converter (14) and can be switched on or off on the basis of signals from the evaluation unit (7).

**23.** Device according to one of Claims 15 to 22, **characterised in that** the measuring device (4) includes a band-stop filter tuned to the nominal frequency.

**24.** Device according to one of Claims 15 to 23, **characterised in that** the measuring device includes band-pass filters tuned to the test frequencies.

**25.** Device according to one of Claims 15 to 24, **characterised in that** it includes a known test impedance (19) switched between the current source and the network with a controllable switch (20) switched in parallel to it.

**26.** Device according to Claim 25, **characterised in that** the switch (20) stands under the control of the evaluation unit (7).

**27.** Device according to one of Claims 15 to 26, **characterised in that** it is provided with an individual identification code, which can be fed into the network, and means for the analysis and assessment of identification codes of other corresponding devices fed into the network.

**Revendications**

**1.** Procédé pour mesurer l'impédance d'un réseau d'alimentation électrique à sa fréquence nominale par application dans le réseau d'un courant de contrôle qui est formé d'au moins un signal périodique à au moins une fréquence de contrôle (f1, f2) différente de la fréquence nominale et mesure des modifications du courant de réseau et de la tension de réseau ainsi obtenues, **caractérisé par le fait que** l'on mesure le courant de réseau et la tension de réseau pendant un premier intervalle de temps présélectionné (T1) sans et pendant un deuxième intervalle de temps présélectionné (T2) avec application du courant de contrôle, que l'on effectue une analyse de Fourier pour la fréquence de contrôle ou les fréquences de contrôle (f1, f2) de manière à déterminer les coefficients de Fourier complexes du courant de réseau et de la tension de réseau pour la fréquence de contrôle ou les fréquences de contrôle pour chacun des deux intervalles de temps (T1, T2), à en déduire des différences complexes, caractéristiques des modifications du courant de réseau et de la tension de réseau, et à utiliser les différences pour calculer l'impédance du réseau à la fréquence de contrôle ou aux fréquences de contrôle (f1, f2) et que l'on détermine à partir de cela l'impédance du réseau d'alimentation électrique à la fréquence nominale.

**2.** Procédé selon la revendication 1, **caractérisé par le fait que** le courant de contrôle est formé d'au moins deux signaux périodiques à des fréquences de contrôle (f1, f2) différentes de la fréquence nominale, que l'on détermine au moyen de l'analyse de Fourier les impédances résultantes pour chaque fréquence de contrôle (f1, f2) et que l'on déduit l'impédance du réseau d'alimentation électrique par approximation à partir des impédances obtenues pour les fréquences de contrôle (f1, f2).

**3.** Procédé selon la revendication 1 ou 2, **caractérisé par le fait que** l'on utilise des signaux sinusoïdaux pour former le courant de contrôle.

**4.** Procédé selon la revendication 2 ou 3, **caractérisé par le fait que** le courant de contrôle est formé de deux signaux dont les fréquences de contrôle (f1, f2) se situent symétriquement de part et d'autre de la fréquence nominale.

**5.** Procédé selon la revendication 4, **caractérisé par le fait que** l'impédance du réseau d'alimentation électrique est obtenue par formation de la moyenne des impédances déterminées aux deux fréquences de contrôle (f1, f2).

**6.** Procédé selon l'une des revendications 1 à 5, **caractérisé par le fait que** les deux intervalles de temps (T1, T2) sont au moins aussi longs que le plus petit commun multiple des périodes de la fréquence nominale et des fréquences de contrôle (f1, f2).

**7.** Procédé selon la revendication 6, **caractérisé par le fait que** le deuxième intervalle de temps (T2) n'est pas plus long qu'une seconde.

**8.** Procédé selon l'une des revendications 2 à 7, **caractérisé par le fait que** les deux fréquences de contrôle (f1, f2) se situent entre 9 Hz et 121 Hz.

**9.** Procédé selon l'une des revendications 1 à 8, **caractérisé par le fait que** l'application du courant de contrôle et les modifications qui en résultent ont lieu avec la même position de phase que la mesure du courant de réseau et de la tension de réseau sans application du courant de contrôle.

**10.** Procédé selon l'une des revendications 1 à 9, **caractérisé par le fait que** l'on déduit un signal de contrôle, d'état ou de commutation de l'impédance déterminée pour la fréquence nominale.

**11.** Procédé selon l'une des revendications 1 à 10, **caractérisé par le fait que** le courant de contrôle est appliqué à l'aide d'un convertisseur de courant en parallèle sur le réseau.

**12.** Procédé selon l'une des revendications 1 à 11, **caractérisé par le fait que** l'on utilise un convertisseur de courant (14) en parallèle sur le réseau pour saisir le courant de réseau et la tension de réseau.

**13.** Procédé selon la revendication 11 ou 12, **caractérisé par le fait que** l'on superpose une valeur de consigne du courant de contrôle à une valeur de consigne du courant de réseau générée dans le convertisseur de courant.

**14.** Procédé selon l'une des revendications 11 à 13, **caractérisé par le fait que** la valeur de consigne du courant de contrôle est transmise au convertisseur de courant (14) par une unité d'évaluation indépendante (7).

**15.** Dispositif pour mesurer l'impédance d'un réseau d'alimentation électrique à sa fréquence nominale, contenant un moyen (3, 14) pour appliquer un courant de contrôle dans le réseau, un dispositif de mesure (4) pour mesurer le courant de réseau, la tension de réseau et les modifications du courant de réseau et de la tension de réseau obtenues par l'application du courant de contrôle ainsi qu'une unité d'évaluation (7) reliée au dispositif de mesure (4), **caractérisé par le fait qu'**il est conçu pour réaliser le procédé selon l'une ou plusieurs des revendications 1 à 14.

**16.** Dispositif selon la revendication 15, **caractérisé par le fait que** le moyen (3, 14) contient une source de courant commandable.

**17.** Dispositif selon la revendication 16, **caractérisé par le fait que** la source de courant est commandée par l'unité d'évaluation (7).

**18.** Dispositif selon la revendication 16 ou 17, **caractérisé par le fait que** la source de courant commandable est un convertisseur de courant (14) en parallèle sur le réseau.

**19.** Dispositif selon la revendication 18, **caractérisé par le fait que** le dispositif de mesure (4) est au moins partiellement une partie intégrante du convertisseur de courant (14).

**20.** Dispositif selon la revendication 18 ou 19, **caractérisé par le fait que** l'unité d'évaluation (7) est au moins partiellement une partie intégrante du convertisseur de courant (14).

**21.** Dispositif selon l'une des revendications 18 à 20, **caractérisé par le fait que** le convertisseur de courant (14) fait suivre au courant de réseau une valeur de consigne de courant et que le courant de contrôle est généré par modification correspondante de cette valeur de consigne de courant.

**22.** Dispositif selon la revendication 21, **caractérisé par le fait que** la valeur de consigne du courant de contrôle peut être générée dans le convertisseur de courant (14) ou stockée dans une mémoire du convertisseur de courant (14) et activée ou désactivée sur des signaux de l'unité d'évaluation (7).

**23.** Dispositif selon l'une des revendications 15 à 22, **caractérisé par le fait que** le dispositif de mesure (4) contient un filtre coupe-bande accordé sur la fréquence nominale.

**24.** Dispositif selon l'une des revendications 15 à 23, **caractérisé par le fait que** le dispositif de mesure contient des filtres passe-bande accordés sur les fréquences de contrôle.

**25.** Dispositif selon l'une des revendications 15 à 24, **caractérisé par le fait qu'**il contient une impédance de test (19) connue, avec un commutateur commandable (20) en parallèle sur elle, montée entre la source de courant et le réseau.

**26.** Dispositif selon la revendication 25, **caractérisé par le fait que** le commutateur (20) est commandé par l'unité d'évaluation (7).

**27.** Dispositif selon l'une des revendications 15 à 26, **caractérisé par le fait qu'**il est muni d'un identifiant individuel injectable sur le réseau et de moyens pour analyser et tenir compte d'identifiants injectés sur le réseau d'autres dispositifs correspondants.

Fig. 1

Fig. 2

Fig. 3